# DEMANDE DE BREVET EUROPEEN

(11) **EP 1 873 842 A1**
(43) Date de publication de la demande: **02.01.2008**
(21) Numéro de dépôt: 07290763.7
(22) Date de dépôt: 20.06.2007
(51) Int. Cl.: H01L 31/042, E04D 13/18

(54) **Module à effet photovoltaïque, notamment pour toit de bâtiment logistique**

(30) Priorité: 23.06.2006 FR 0605652
(71) Demandeur: GSE, F-84005 Avignon cedex 1 (FR)
(72) Inventeur: Tixier, Robert, 30400 Villeneuve les Avignon (FR)
(74) Mandataire: Quantin, Bruno Marie Henri

(57) **Abrégé**

Module photovoltaïque adapté à être monté sur un toit, comportant un support portant une pluralité de bandes utiles sensiblement parallèles et équipées de cellules photovoltaïques, alternant avec une pluralité de bandes neutres sensiblement parallèles et dénuées de cellules photovoltaïques, le support ayant une forme généralement plissée, avec des flancs respectivement formés par les bandes utiles et les bandes neutres qui sont séparés par des lignes de crête et des gouttières

## Description

### Domaine technique de l'invention

L'invention concerne des modules de production électrique par effet photovoltaïque (ou modules à effet photovoltaïque) adaptés, notamment, à être implantés sur les toits de bâtiments de type logistique, existants ou non ; ces bâtiments sont en pratique de grande surface avec des toits à très faible pente (typiquement quelques degrés) et une étanchéité de type membrane. Il va de soi que ces modules, conçus principalement pour cette application peuvent être montés sur des toits d'autres types de bâtiment, sur d'autres types de toitures, voire sur d'autres types de surfaces.

### Etat de la technique

Il est connu d'implanter des cellules photovoltaïques sur des toits.

En fait, une telle implantation est généralement définie en sorte de satisfaire les conditions suivantes :
- Permettre un auto-nettoyage des cellules,
- Permettre un rendement optimisé (azimut),
- Minimiser les surcharges ponctuelles,
- Limiter la surcharge à des valeurs pouvant être reprises pour tous types de bâtiments,
- Limiter la prise au vent,
- Limiter la surcharge due à l'accumulation de neige,
- Permettre une mise en place aisée sans risque de détérioration de l'étanchéité (donc, permettre un remplacement ou une réparation aisée de la partie isolation).

On peut noter que certaines des conditions précitées ne dépendent que de l'inclinaison ou de l'orientation des cellules, de sorte qu'une telle implantation de cellules photovoltaïques sur des toits d'habitation peut ne poser aucun problème pour satisfaire aux objectifs précités, compte tenu de la pente généralement importante de ces toits.

Mais il n'en est pas de même dans le cas des bâtiments de type logistique qui, comme cela a été indiqué ci-dessus, ont des toits dont l'inclinaison vis-à-vis de l'horizontale est généralement très faible : l'implantation de panneaux solaires (par exemple de type amorphe) à la surface même de ces toits, par exemple par collage sur la membrane d'étanchéité, n'est alors pas efficace. A titre subsidiaire, il faut noter que leur étroite association avec les membranes d'étanchéité sous-jacentes implique que, en cas de remplacement des membranes ou des panneaux, il faut remplacer les panneaux (ou les membranes) associé(e)s.

C'est pourquoi il a été proposé de disposer des panneaux solaires, non à la surface même des toits, mais au-dessus d'eux.

C'est ainsi que l'on connaît des panneaux traditionnels (de type polycristallin ou monocristallin) groupés en batterie, sur des supports eux-mêmes fixés sur un quadrillage de poutres métalliques supportées par des potelets traversant la membrane d'étanchéité et fixées sur les éléments de charpente sous-jacents sur le toit ; mais cette solution présente les inconvénients suivants :
- Poids et complexité de l'installation.
- Problème technique de mise en place dû au poids des éléments manipulés.
- Obligation de prévoir à la construction les dimensionnements de charpente et les sorties des potelets.
- Prise au vent importante.
- Rétention de neige.
- Problème pour le remplacement des complexes d'étanchéité (démontage et manipulation d'éléments importants).

A titre d'exemple, le document JP - 9-217471 décrit un ensemble de modules de panneaux solaires qui sont montés sur un toit sensiblement horizontal au moyen de supports en gouttière asymétriques dont les bords sont respectivement fixés aux bords desdits modules ; ces gouttières semblent être fixées par des éléments traversants à la structure du toit ; en fait ce document se préoccupe principalement de recouvrir des zones résiduelles du toit (c'est-à-dire non recouvertes par des modules) par des panneaux similaires, montés sur des gouttières similaires, mais sans effet solaire. Une telle solution présente les inconvénients précités, notamment de poids et de complexité.

Il a par ailleurs été proposé des panneaux traditionnels de type polycristallin ou monocristallin posés sur des bacs ou profils ballastés (donc maintenus en place par leurs poids, sans traversée des couches d'étanchéité), mais cette solution présente également des inconvénients significatifs :
- Poids très important.
- Risque de renversement dû à la prise au vent.
- Accumulation de neige.
- Difficultés de mise en place dues au poids.
- Risque de détérioration de la membrane d'étanchéité aux angles inférieurs des bacs en contact avec la membrane et déformation de l'isolant dû au poids des éléments.
- Obligation d'avoir une charpente suffisante pour reprendre les charges importantes des bacs ballastés.

Le document US - 6 046 399 décrit une solution simple et peu coûteuse visant à minimiser le poids par rapport aux solutions ballastées, à permettre le remplacement des éléments solaires sans avoir à remplacer l'étanchéité sous-jacente, ainsi qu'à s'appliquer à des toits existants sans modifications sensibles. Ce document décrit ainsi la combinaison d'une membrane imperméable surmontée par une pluralité de blocs d'isolation présentant des saillies et des creux complémentaires grâce à quoi ils sont fixés les uns aux autres en sorte de former une sorte de second toit ; à certains au moins de ces blocs sont fixées des plaques métalliques; ces plaques métalliques comportent des éléments de montage pour le montage amovible des panneaux solaires ; ces éléments de montage peuvent permettre une variation de l'inclinaison des modules par rapport au toit. Certains blocs non munis par des plaques peuvent être remplacés par des blocs munis de telles plaques, ce qui confère une certaine adaptabilité. Toutefois, cette solution reste complexe et coûteuse, et si l'étanchéité est satisfaite, cela provient qu'il n'y a pas fixation proprement dite au toit, ce qui peut poser des problèmes en cas de vent violent.

### Problème technique et exposé de l'invention

L'invention vise à pallier les inconvénients des solutions connues précitées.

C'est ainsi qu'elle concerne un module photovoltaïque adapté à être monté sur un toit à faible inclinaison (d'au plus quelques degrés) tout en présentant une orientation compatible à des performances acceptables de captation du flux solaire, qui soit simple et peu coûteux de conception et de mise en place, et qui soit peu sensible aux risques de salissures, de prise excessive au vent ou d'accumulation de neige. On peut noter qu'une telle définition de l'objet de l'invention ne porte que sur le module, indépendamment de ses moyens de fixation sur la toiture.

A propos de coût, il mérite ici d'être précisé que les opérations d'implantation de panneaux photovoltaïques représentent désormais une fraction tout à fait significative du coût des panneaux eux-mêmes (pouvant dépasser les 30%) ; il est donc tout à fait important d'arriver à simplifier la pose de tels panneaux, en permettant notamment que cette pose puisse se faire par deux personnes seulement.

L'invention propose à cet effet un module photovoltaïque adapté à être monté sur un toit, comportant un support comportant une pluralité de bandes utiles sensiblement parallèles et équipées de cellules photovoltaïques, alternant avec une pluralité de bandes neutres sensiblement parallèles et dénuées de cellules photovoltaïques, le support ayant une forme généralement plissée, avec des flancs respectivement formés par les bandes utiles et les bandes neutres qui sont séparés par des lignes de crête et des gouttières.

L'invention a également pour objet un système à effet photovoltaïque comportant non seulement un tel module mais en outre des moyens de fixation qui, en complément des exigences satisfaites par le module en soi, permettent une implantation simple et peu onéreuse sur une toiture, sans impliquer d'adaptation lourde de celle-ci si celle-ci est préexistante, ainsi que son remplacement ultérieur, indépendamment de la couche d'étanchéité sous-jacente.

L'invention propose à cet effet un système à effet photovoltaïque comportant un module du type précité et des moyens de fixation pour sa mise en place sur une toiture, ces moyens comportant une platine destinée à s'appuyer sur cette toiture et comportant d'un côté une tige de retenue destinée à coopérer avec des moyens de maintien du module et de l'autre côté des tiges d'accrochage adaptées à se fixer à la toiture, une collerette adhésive d'étanchéité étant prévue pour couvrir la platine en débordant de celle-ci jusqu'à couvrir une zone de toiture entourant cette platine.

L'invention permet ainsi une implantation simple de production électrique par modules photovoltaïques sur tout type de toiture, notamment sur les toits de bâtiments de type logistique (bâtiments de grande surface, avec des toits à très faible pente et une étanchéité de type membrane).

Le faible poids des éléments mis en cause (module et éléments de fixation) en permet la mise en oeuvre sur des toitures existantes ; il autorise également la manutention manuelle de ces éléments, simplement par deux opérateurs.

La conception plissée du support permet de donner une inclinaison suffisante des modules photovoltaïques pour permettre un rendement optimum et un auto nettoyage.

De manière avantageuse, il y a une dissociation de la fonction production photovoltaïque et de la fonction étanchéité.

Selon des caractéristiques préférées du module, éventuellement combinées :
- les bandes utiles et les bandes neutres définissent des coins dont l'angle est compris entre 60° et 160°, ce qui correspond à une différence sensible d'orientation, et contribue notamment à minimiser le phénomène d'ombres portées ; cet angle est de préférence compris entre 80° et 120°,
- transversalement à la direction des lignes de crête, les bandes utiles sont plus longues que les bandes neutres, ce qui permet d'optimiser l'utilisation de la surface du support,
- les bandes utiles font, avec le plan moyen du module (donc de la toiture lorsque ce module est en place), un angle compris entre 15 et 30°, ce qui permet de rapprocher la direction normale aux cellules photovoltaïques de la direction moyenne du soleil, tout en favorisant les phénomènes d'écoulement le long des bandes utiles, en vue de l'élimination des salissures, de l'eau de pluie et de la neige,
- le support est une tôle métallique, ce qui correspond à une matière première bien connue, tout en combinant une bonne propriété mécanique avec un faible poids,
- les bandes neutres peuvent comporter des passages de ventilation, ce qui contribue à ventiler les canaux formés entre la toiture et le module,
- les gouttières comportent un fond aux angles arrondis, ce qui minimise les risques de dégradation de la toiture par le module, et peut faciliter son implantation sur cette toiture,
- une portion du support située sous ce fond comporte un matériau résiliant compatible avec la couche d'étanchéité de la toiture, ce qui contribue à minimiser les risques de dégradation,
- les cellules photovoltaïques sont fixées par collage au support, ce qui correspond à un mode de fixation bien connu tout en minimisant le poids final puisque ces cellules (elles peuvent avoir été préalablement regroupées au sein d'un réseau formant un panneau solaire) sont fixées sans cadre de maintien,
- les bandes utiles ont, transversalement à la direction des lignes de crête, une dimension adaptée au module photovoltaïque, aujourd'hui comprise entre 15 et 60 centimètres, ce qui correspond à des ondulations de faible dimension, et contribue à rendre ces modules portables,
- le support a une forme rectangulaire dont les dimensions sont sensiblement comprises entre 1 m et 6 m, ce qui correspond également à rendre ces modules portables,
- le support a une forme rectangulaire et la direction des lignes de crête a un angle d'inclinaison non nul vis-à-vis de chacun des côtés de support ; en effet, il peut être souhaité que les modules soient disposés sur une toiture parallèlement aux côtés, et une telle inclinaison (convenablement définie à l'avance en fonction de la destination du module) permet néanmoins de se rapprocher de l'orientation optimale des cellules photovoltaïques.

Selon un aspect original en soi, l'invention propose un dispositif de fixation pour la fixation d'un équipement, tel que le module précité (ou un garde-corps, etc.), sur une surface munie d'une couche d'étanchéité, telle qu'une toiture, comportant une platine destinée à s'appuyer sur cette surface et comportant d'un côté un élément de retenue destiné à coopérer avec des moyens de maintien de l'équipement et de l'autre côté des éléments d'accrochage adaptés à se fixer à la surface, une collerette adhésive d'étanchéité étant prévue pour couvrir la platine en débordant de celle-ci jusqu'à couvrir une zone de surface entourant cette platine.

L'invention propose aussi un système comportant un tel module et un tel dispositif de fixation.

Selon des caractéristiques préférées de l'invention concernant les éléments de fixation, éventuellement combinées :
- les moyens de maintien du module comportent une bride engagée sur la tige de retenue et prenant latéralement appui sur un bord du module ; le module n'a donc pas besoin d'être particulièrement adapté aux éléments qui en assureront la fixation sur une toiture donnée,
- les moyens de maintien du module comportent un passage ménagé dans une gouttière du module pour le passage de la tige de retenue et un ensemble rondelle/boulon engagé sur cette tige de retenue en prenant appui sur le pourtour de ce passage, ce qui permet une fixation distribuée en plusieurs endroits du module, ce qui assure une fixation plus solide.

Selon encore un autre objet de l'invention, celle-ci propose une toiture présentant une direction de plus grande pente et portant au moins un module du type précité dont les bandes utiles et neutres ont une direction commune faisant un angle d'au plus 80° vis-à-vis de la direction de plus grande pente ; cela garantit que l'eau, ou la neige accumulée dans les gouttières constituées par les flancs adjacents s'écoulent par gravité vers l'extérieur du module.

### Description de l'invention

Des objets, caractéristiques et avantages de l'invention ressortent de la description qui suit, donnée à titre d'exemple illustratif non limitatif, en regard des dessins annexés sur lesquels :
- la figure 1 est une vue en perspective d'une portion de toiture équipée d'un module photovoltaïque conforme à l'invention,
- la figure 2 est une vue de dessus d'un élément de fixation adapté à maintenir en place un module du type représenté à la figure 1,
- la figure 3 est une vue en coupe d'une portion de la toiture de la figure 1 à l'emplacement où un élément de fixation conforme à la figure 2 maintient deux modules adjacents, et
- la figure 4 est un schéma de principe d'une autre toiture comportant un module conforme à l'invention.

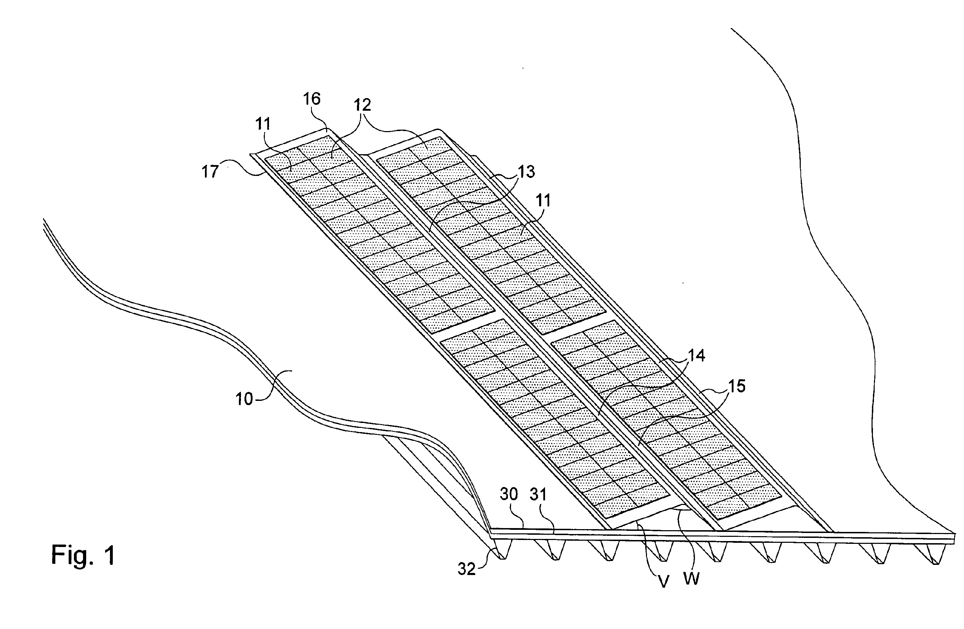

La figure 1 représente une portion de toiture 10 sur laquelle est disposé un module 11 à effet photovoltaïque conforme à l'invention.

Ce module photovoltaïque comporte un support comportant une pluralité de bandes utiles 12 sensiblement parallèles et équipées de cellules photovoltaïques réparties en modules repérés 11, alternant avec une pluralité de bandes neutre 13 sensiblement parallèles et dénuées de cellules photovoltaïques. Ces cellules photovoltaïques ou les modules qu'ils constituent sont avantageusement rapportés par collage sur le support.

Ce support a une forme générale plissée, avec des flancs respectivement constitués par les bandes utiles et les bandes neutres ; celles-ci sont séparées par des lignes de crête 14 et des gouttières 15.

Le support se compose avantageusement d'une tôle métallique A réalisée à partir d'une bobine standard de largeur maximale par exemple à 1.5 mètre (typiquement comprise entre 1 et 2 mètres), découpée à la demande suivant le type de module photovoltaïque demandé. Cette tôle peut-être être en acier, de préférence en acier laqué, mais aussi en aluminium.

L'aspect plissé de cette tôle peut résulter d'un pliage pour faire, dans l'exemple de la figure 1, une double ondulation asymétrique (il peut bien évidemment y en avoir un nombre quelconque). Les ondulations sont en pratique périodiques c'est-à-dire que les ondes qui se suivent sont sensiblement identiques les unes aux autres. Par ailleurs, elles sont avantageusement asymétriques en ce sens que, transversalement à la direction des lignes de crête, les bandes utiles munies de cellules photovoltaïques sont plus larges que les bandes neutres.

Cette largeur est choisie en fonction de la largeur des modules obtenus par la technologie photovoltaïque choisie. Elle est typiquement actuellement comprise entre 10 cm et 40 cm.

On peut noter sur la figure 1 que les bandes utiles comportent deux jeux successifs de panneaux solaires ; ce nombre dépend de la technologie choisie et des dimensions choisies pour le module.

Pour en faciliter la manutention, le support a avantageusement une forme rectangulaire dont les dimensions sont comprises entre 1 mètre et 6 mètres.

Par rapport au plan moyen, les bandes utiles font un angle d'inclinaison, noté V, compris entre 15 et 30 degrés.

Les bandes utiles et les bandes neutres forment des coins dont l'angle, noté W, est typiquement compris entre 60° et 160° ; il est de l'ordre de 120° dans l'exemple représenté. Il peut en fait être choisi en fonction de la latitude de pose pour diminuer les ombres portées ; une valeur de l'ordre de 90° (entre 80° et 120°) peut permettre un bon compromis entre cette minimisation des ombres portées et une bonne orientation vis-à-vis de la direction moyenne du soleil.

Les portions du support formant les bandes neutres peuvent comporter avantageusement des perforations ou des ouïes pour améliorer la ventilation des canaux prismatiques définis par le module et la toiture.

Les gouttières formant le fond des ondulations définies par le support plissé, de même que les lignes de crête, peuvent être aigues ou arrondies ; de manière préférée, les lignes de crête sont aigues, tandis que les gouttières sont arrondies pour faciliter l'écoulement de ce qui aura pu s'accumuler entre les ondulations du support, et pour optimiser l'appui du module sur la toiture.

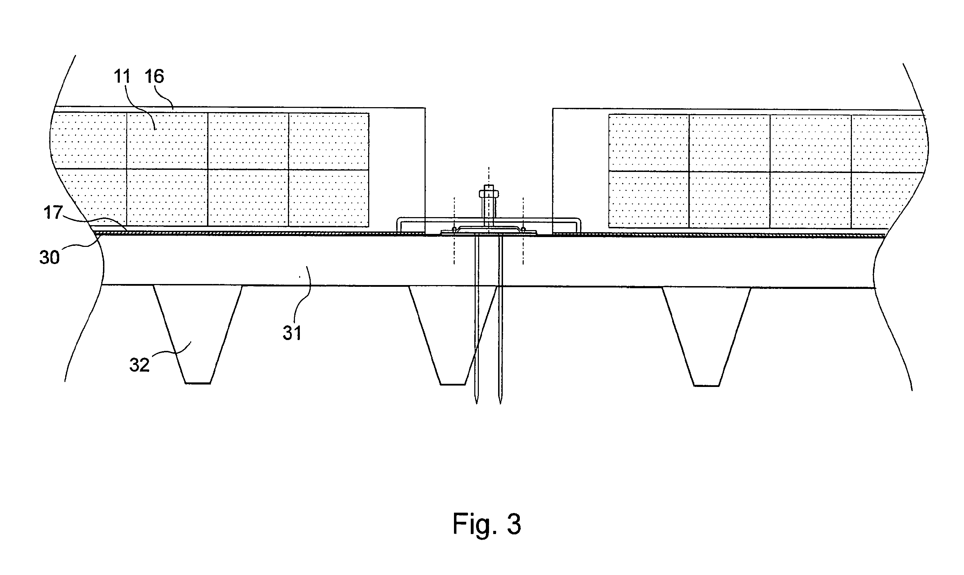

C'est ainsi que, de manière préférée, la largeur de ces gouttières est de l'ordre de 50 mm, et, sur la face inférieure du support à l'endroit de ces gouttières, il peut y avoir un matériau résiliant 17 (voir la figure 3) compatible physiquement et chimiquement avec la membrane d'étanchéité.

Sur les bandes utiles sont collés des panneaux photovoltaïques qui, classiquement, peuvent être soit de technologie polycristalline (par exemple le produit Sunsteel ® de la Sté Sunland 21), soit de technologie amorphe (par exemple le produit développé par la Sté Unisolar), soit de technologie Spheral Solar ® développée par la Sté ATS ; toutefois l'invention ne se limite pas à ces technologies mais fait intervenir, de manière générale, des panneaux de toute technologie applicable.

Ainsi que le sait l'homme de métier, chaque module photovoltaïque est équipé d'un connecteur électrique, (par exemple de type « multicontact solar live » ou tout autre produit équivalent). Chaque module peut être équipé d'un connecteur spécifique, ou au contraire les modules d'un même panneau peuvent être rassemblés par des conducteurs plats (par exemple le produit Sun steel ® par Sunland 21), dans ce cas il existe un seul connecteur par panneau. Ces moyens de connexion électrique, ne rentrant pas directement dans l'objet de l'invention, ne seront pas plus détaillés ici.

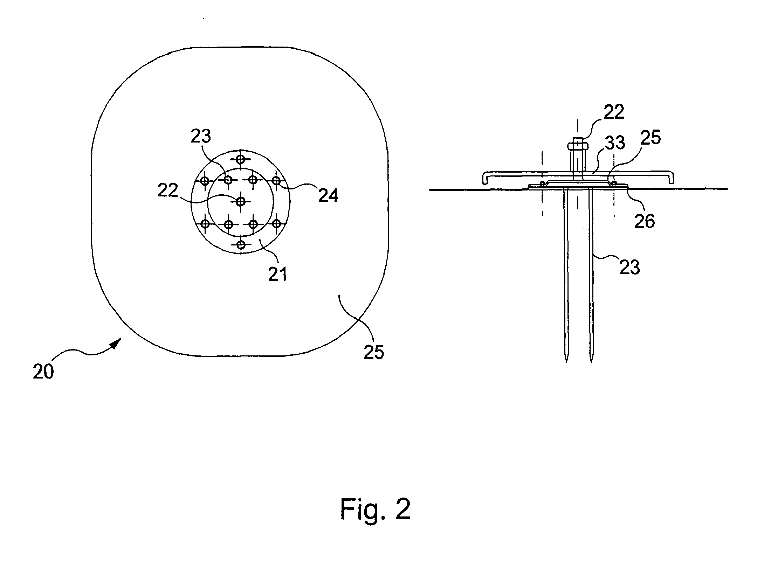

Les figures 2 et 3 décrivent plus en détail un exemple d'élément de fixation 20 propre à la fixation à la toiture d'un module conforme à celui de la figure 1.

Cet élément de fixation 20 comporte une platine 21 sur un côté de laquelle est fixée, par exemple par soudage, une tige filetée de retenue 22 et une contre plaque 26 possédant 4 trous fraisés qui permettent la mise en place des fixations 23 et 6 tiges filetées soudées 24.

En fait, ainsi que cela ressort clairement de la figure 3, la toiture comporte classiquement une membrane d'étanchéité 30, longeant une couche d'isolant 31 elle-même fixée sur une surface métallique 32, formée de plaques nervurées, classiquement désignées sous l'appellation de bac métallique.

Les fixations 23 sont ici des vis autoforeuses ou autotarodeuses qui fixent la platine à la toiture en traversant la membrane d'étanchéité 30, l'isolant 31 et se fixant sur le bac métallique 32. L'étanchéité est avantageusement assurée par une collerette 25 capable de couvrir une bonne partie de la platine en débordant de celle-ci jusqu'à couvrir une zone de toiture entourant cette platine. Pour assurer une fixation et une étanchéité efficaces de cette collerette sur la membrane d'étanchéité, cette collerette est avantageusement de même type que la membrane d'étanchéité. Pour sa fixation sur la membrane d'étanchéité, cette collerette est collée ou soudée thermiquement à la membrane de toiture 30. Sa fixation sur la platine est réalisée par le boulonnage de la plaque 21 sur la plaque 26.

Après mise en place des vis d'accrochage, la plaque 21 est boulonnée sur la plaque 26 et la collerette est rabattue et collée/soudée sur la membrane d'étanchéité.

Les modules sont maintenus en place sur la toiture au moyen de moyens de maintien engagés sur la tige de retenue 22.

Ces moyens de maintien sont, dans l'exemple de la figure 3, une pièce de pression 33 comportant une bride prenant latéralement appui sur un bord du module ; en effet, on observe sur cette figure 3 que le maintien en place des modules se fait en périphérie, les platines étant disposées à côté des modules ; il n'est donc pas besoin de prévoir une quelconque préparation du support pour en permettre la fixation sur la toiture.

En variante non représentée, le support comporte des passages, par exemple situés dans les gouttières15 de la figure 1, en profitant de leur forme avantageusement arrondie, et les tiges de retenue 22 traversent le support par ces passages ; une rondelle et un boulon engagés sur cette tige de retenue maintiennent le module en place en prenant appui sur le pourtour de ce passage.

En variante, les passages peuvent aussi, notamment, être disposés dans les zones de crête, ce qui minimise les risques de traversée du support par les intempéries : les modules servent alors de protection locale de la toiture.

A la figure 1, le module est disposé en sorte que la direction des lignes de crête (et celle des gouttières qui lui est parallèle) est sensiblement parallèle à la ligne de plus grande pente du toit, schématisée par la flèche située à gauche du module ; on comprend qu'ainsi on profite au mieux de la gravité pour faire s'écouler l'eau et la neige qui peut s'accumuler entre les flancs du module.

Lorsque la toiture est horizontale, ce phénomène d'évacuation ne dépend pas de l'orientation, qui peut être choisie uniquement en fonction de la direction moyenne du soleil.

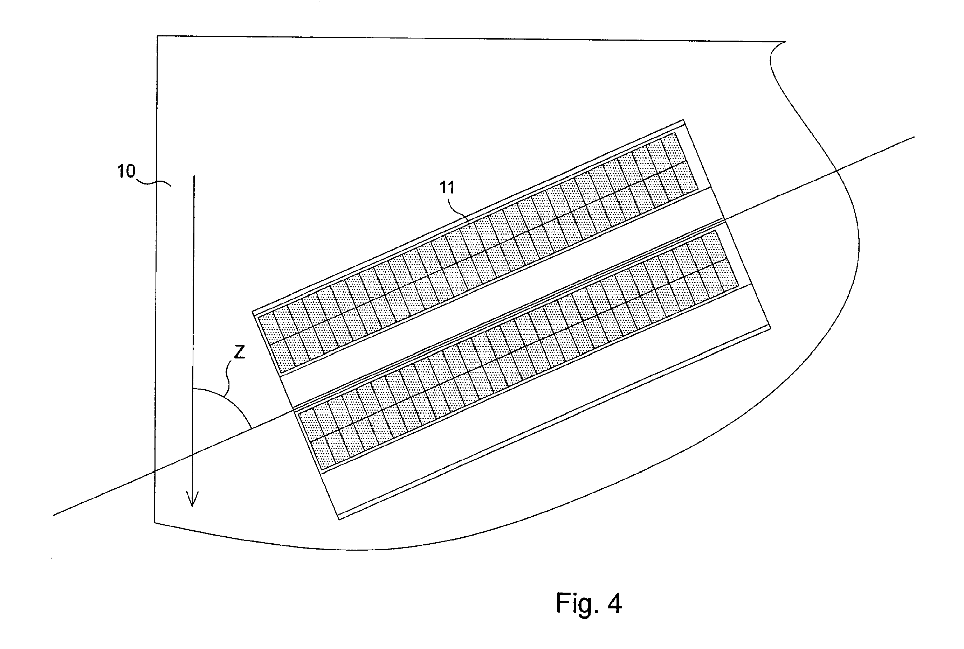

Toutefois, il faut bien comprendre que, lorsque la toiture a une direction de plus grande pente (voir la figure 4 où cette direction est, comme à la figure 1, schématisée par une flèche), le module peut avoir une orientation quelconque ; on observe toutefois que, dès lors que la direction des lignes de crête du module n'est pas perpendiculaire à cette direction de plus grande pente (en faisant un angle Z de préférence au plus égal à 80°), on profite, quoique de manière modérée, de l'effet de gravité précité.

L'invention est décrite ci-dessus à propos d'une toiture de bâtiment logistique ayant une faible pente, mais il faut bien comprendre qu'elle peut s'appliquer à des toitures plus pentues. Elle peut même, le cas échéant, s'appliquer à toute surface présentant une orientation moyenne sensiblement éloignée de la direction moyenne du soleil.

## Revendications

1. Module photovoltaïque (11) adapté à être monté sur un toit (10), comportant un support (16) comportant une pluralité de bandes utiles (12) sensiblement parallèles et équipées de cellules photovoltaïques (11), alternant avec une pluralité de bandes neutres (13) sensiblement parallèles et dénuées de cellules photovoltaïques, le support ayant une forme généralement plissée, avec des flancs respectivement formés par les bandes utiles et les bandes neutres qui sont séparés par des lignes de crête (14) et des gouttières (15).

2. Module selon la revendication 1, **caractérisé en ce que** les bandes utiles et les bandes neutres définissent des coins dont l'angle est compris entre 60° et 160°.

3. Module selon la revendication 2, **caractérisé en ce que** l'angle des coins est compris entre 80° et 120°.

4. Module selon l'une quelconque des revendications 1 à 3, **caractérisé en ce que**, transversalement à la direction des lignes de crête, les bandes utiles sont plus longues que les bandes neutres.

5. Module selon l'une quelconque des revendications 1 à 4, **caractérisé en ce que** les bandes utiles font, avec le plan moyen du module, un angle compris entre 15 et 30°.

6. Module selon l'une quelconque des revendications 1 à 5, **caractérisé en ce que** le support est une tôle métallique.

7. Module selon l'une quelconque des revendications 1 à 6, **caractérisé en ce que** les bandes neutres peuvent comporter des passages de ventilation.

8. Module selon l'une quelconque des revendications 1 à 7, **caractérisé en ce que** les gouttières comportent un fond globalement arrondi.

9. Module selon la revendication 8, **caractérisé en ce qu'**une portion du support située sous ce fond peut comporter un matériau résiliant adapté à la couche d'étanchéité d'une toiture.

10. Module selon l'une quelconque des revendications 1 à 9, **caractérisé en ce que** les cellules photovoltaïques sont fixées par collage au support.

11. Module selon l'une quelconque des revendications 1 à 10, **caractérisé en ce que** les bandes utiles ont, transversalement à la direction des lignes de crête, une dimension comprise entre 15 et 60 centimètres.

12. Module selon l'une quelconque des revendications 1 à 11, **caractérisé en ce que** le support a une forme rectangulaire dont les dimensions sont sensiblement comprises entre 1 m et 6 m.

13. Module selon l'une quelconque des revendications 1 à 12, **caractérisé en ce que** le support a une forme rectangulaire et la direction des lignes de crête a un angle d'inclinaison non nul vis-à-vis de chacun des côtés de support.

14. Système à effet photovoltaïque comportant un module selon l'une quelconque des revendications 1 à 13 et des moyens de fixation pour sa mise en place sur une toiture, ces moyens comportant une platine (30) destinée à s'appuyer sur cette toiture et comportant d'un côté une tige de retenue (22) destinée à coopérer avec des moyens de maintien du module et de l'autre côté des tiges d'accrochage (23) adaptées à se fixer à la toiture, une collerette adhésive d'étanchéité (25) étant prévue pour couvrir la platine en débordant de celle-ci jusqu'à couvrir une zone de toiture entourant cette platine.

15. Système selon la revendication 14, **caractérisé en ce que** les moyens de maintien du module comportent une bride (26) engagée sur la tige de retenue et prenant latéralement appui sur un bord du module.

16. Système selon la revendication 14, **caractérisé en ce que** les moyens de maintien du module comportent un passage ménagé dans une gouttière du module pour le passage de la tige de retenue et un ensemble rondelle/boulon engagé sur cette tige de retenue en prenant appui sur le pourtour de ce passage.

17. Toiture présentant une direction de plus grande pente et portant un module selon l'une quelconque des revendications 1 à 13, dans lequel les lignes de crête et les gouttières font un angle d'au plus 80° par rapport à cette direction de plus grande pente.
